# EUROPEAN PATENT APPLICATION

(11) **EP 3 428 816 A1**
(43) Date of publication of application: **16.01.2019**
(21) Application number: 17196826.6
(22) Date of filing: 17.10.2017
(51) Int. Cl.: G06F 21/10

(54) **METHOD AND SYSTEM FOR AUTHORIZING A MOBILE DEVICE TO ACCESS A DIGITAL CONTENT**

(30) Priority: 11.07.2017 FR 1756577
(71) Applicant: Eutelsat S.A., 75015 Paris (FR)
(72) Inventor: GRAZZINI, Sébastien, 92130 Issy les Moulineaux (FR)
(74) Representative: Cabinet Camus Lebkiri

(57) **Abstract**

Method (M) for authorizing a mobile device (MD) to access a digital content by authorizing said mobile device on a Digital Right Management server, said mobile device (MD) being connected to a gateway (GW), said method comprising the following steps:
- The mobile device sends (MD-RE) a request (RE) to the gateway (GW), said request containing a mobile device identifier (MB_ID);
- The gateway signs (GW-S) the request (RE), adds a gateway identifier (GW_ ID) and a timestamp (T) and sends the signed request (S_RE) back to the mobile device (MD);
- The mobile device (MD) sends (MD-S_RE) the signed request (S_RE) to a Request Management Server (RMS);
- The Request Management Server (RMS) verifies that the timestamp (T) is valid and that the request has been signed by the gateway (GW), in order to authenticate the gateway and to authorize the mobile device on a DRM server.

## Description

### TECHNICAL FIELD

The present invention belongs to the field of satellite communications. A first object of the invention is a method for authorizing a mobile device to access a digital content provided by satellite connection. Another object of the invention is a system for authorizing a mobile device to access a digital content provided by satellite connection.

### PRIOR ART

Digital Right Management (DRM) technologies are nowadays widely used to protect digital content, such as video or radio, from unauthorized view. DRM technologies use encryption to protect the content prior to or during streaming, downloading or other transfer.

DRMs require a DRM server to manage the request and issuance of licenses. Some DRMs also incorporate domain controllers, which manage the multiple user devices that can play content under a single license, and metering servers that track usage data and total plays for royalty purposes.

DRM servers are able to authorize or to forbid a specific device to playback a protected content. However, there is a gap between the physical end user, who pays the subscription and the authorization of his mobile device to playback the content: this gap is generally filled by a Request Management Server in charge to associate an end user to one or more mobile devices and to pilot adequately the DRM server.

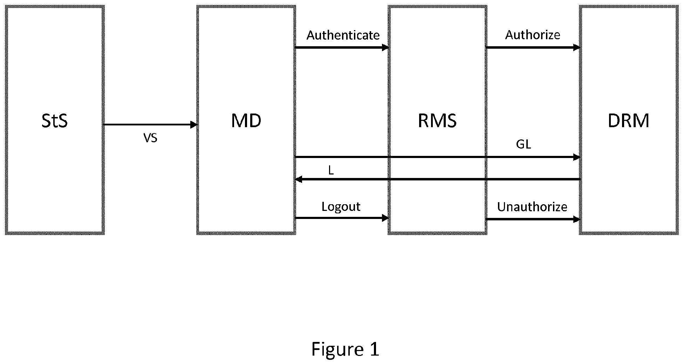

According to the prior art authentication scheme depicted in figure 1, a mobile device MD authenticates itself at a Request Management Server RMS or Customer Management Server. To do this, the MD sends a challenge or request containing its Mobile Device identifier MB_ID, login and password. For example, the login/password can be the login/password that the end user set in a streaming application installed on his mobile device MD.

Upon reception of the request from the Mobile Device MD, the Request Management Server RMS verifies that the user is registered and that the login/password are associated with the mobile device identifier MD_ID. The RMS verifies also the validity of the end user account. If the end user account is valid, then the RMS asks the DRM server to authorize the mobile device. When the mobile device wants to start the video playback, it then requests a license to the DRM server, which answers back depending on authorization granted to the device. If the end user and his mobile device MD are authorized, a license L is given to the mobile device MD. Once authorized, the mobile device MD can stream a digital content, for example a video stream VS from the stream server StS. It is worth to note that the role of a DRM is to authorize or not the playback of a video asset on a given device depending on a set of defined rules which never involve the end user account directly.

The last step of this scenario is the logout. When the end user performs a logout on his device, the mobile device logouts on the RMS. The RMS then unauthorizes the mobile device on the DRM server and the video playback become impossible until next login with the correct credentials. The system could also foresee a forced logout after a period of inactivity.

DRM technologies can be used within several business models, including purchase, subscription, rental, and gifting. In these general cases, the customer is the owner of the mobile device, which must be authorized in the DRM. Thus, the RMS just needs to make the relationship between the customer and the mobile device identifier to enable/disable the video playback.

On the contrary, DRM technologies are not adapted to deal with other business models, like the public space business model. An example of public space business model is the broadcasting of a digital content by the owner of a public space, for example a hotel, a bar or restaurant or an airport lounge. In this case, the public space owner installs a gateway in his premises, pays the subscription to the service provider and allows the guests in his establishment to access the service with their own devices. An example of this application is the multicasting of a digital content provided via satellite connection in a public space. The customers of the public space can then access the digital content.

In such a case, the entity linked to the subscription is the gateway while the entity that has to be authorized on the DRM server are the mobile devices connected to the gateway. The standard login/password authorization of a mobile device is not adapted to this use case. In fact, standard DRM technologies are not able to verify that a mobile device is connected to a given gateway before issuing a license.

For example, standard DRM technologies are not able to prevent the authorization of a mobile device connected to a gateway whose subscription is not active.

### GENERAL DESCRIPTION OF THE INVENTION

The present invention solves the above-mentioned drawbacks by proposing a method and a system for authorizing a mobile device to access a digital content by authorizing said mobile device on a Digital Right Management server.

The present invention describes a method for authenticating a mobile device only if it is connected to a gateway whose owner has acquired the right to broadcast the digital content. The present invention provides a solution to the problem of preventing the access of end users who are not connected to an authenticated gateway, for example a gateway whose subscription is not active.

An object of the present invention is a method for authorizing a mobile device to access a digital content by authorizing said mobile device on a Digital Right Management (DRM) server, said mobile device being connected to a gateway, said method comprising the following steps:
- The mobile device sends a request to the gateway, said request containing a mobile device identifier;
- The gateway signs the request, adds a gateway identifier and a timestamp and sends the signed request back to the mobile device;
- The mobile device sends the signed request to a Request Management Server;
- The Request Management Server verifies that the timestamp is valid and that the request has been signed by the gateway, in order to authenticate the gateway and to authorize the mobile device on a DRM server.

A gateway is an equipment able to serve a digital content to one or more users. For example, the gateway according to the invention is a set-top-box receiving the signal via cable or via satellite link. The gateway according to the invention can be a gateway adapted to the SmartBEAM technology developed by the applicant and capable to deliver video content to portable devices via satellite. The gateway can be connected to Internet or a local network.

The gateway can be connected to a satellite communication system, comprising for example a parabolic antenna and a low-noise block downconverter.

A request or challenge sent by a mobile device is a request to be authorized on a DRM server, in order to obtain a DRM license and being able to decrypt a digital content.

A DRM server is a Digital Rights Management server adapted to receive a request for a license enabling a user to access a protected content. The DRM server can manage such a request and issue a license for the mobile device or user equipment. The DRM server is responsible of video or radio content protection and it ensures that licences are issued securely to allowed devices only.

Before arriving to a DRM server, the requests or challenges issued by a mobile device are processed by a Request Management Server. A request management server can verify some conditions before sending the request to the DRM server and getting a license for the mobile device issued. The Request Management Server can be a Customer Management Server or a business support system (BSS).

The objective of the invention is to authorize a mobile device on a DRM server but only if the mobile device is connected to a given gateway fulfilling some conditions. For example, the subscription associated to the gateway must be active. For this reason, in order to authorize or not a mobile device in the DRM server, the Request Management Server shall check (1) that the mobile device is currently attached to a given gateway; and (2) that this gateway is itself authorized to provide service to new guests.

The method according to the invention is then particularly adapted to manage the access of end users to digital content in a public space. In such a context, several end users are in the premises of a public space managed by the owner of the public space. Examples of public spaces are hotels, restaurants, airport lounge. The owner of the public space is also the owner of the gateway and pays its subscription to a digital content provider. The method according to the invention allows to control that only mobile devices connected to a gateway whose subscription is active can access the digital content.

To solve the problem of authenticating a mobile device which is actually connected to a given gateway, the present invention uses a method in which the first step comprises that the mobile device sends a challenge or request to the gateway. This is possible because both the mobile device and the gateway are connected to the Internet or to a local network, for example through a WiFi connection.

The request sent by the mobile device comprises the mobile device identifier. We mean by mobile device identifier any piece of information sufficient to identify the mobile device. Upon reception of the mobile device challenge or request, the gateway signs the request and adds its gateway identifier and a timestamp and sends it back to the mobile device. We mean by timestamp a piece of information representing the reception time of the request. A gateway identifier is any piece of information sufficient to identify the gateway.

For example, the gateway can use a public/private key cryptography protocol and sign the request with its private key.

The mobile device then sends the signed request to the Request Management Server who verifies that the timestamp is valid, i.e. that the timestamp is not too old. For example, the maximum delay between the creation of the timestamp and the verification by the Request Management Server can be smaller than a few minutes. According to an embodiment the maximum time delay between the creation of the timestamp and the verification by the Request Management Server is equal to or smaller than 5 minutes.

The Request Management Server verifies also that the request is signed by the given gateway. For example, if a public/private key cryptography protocol is used the Request Management Server uses a database of public keys to authenticate the signature of the gateway.

At this point, the Request Management Server has authenticated the gateway and knows that the mobile device is actually connected to the gateway. The Request Management Server checks the properties of the particular gateway, for example if the subscription is active or not or if the maximum number of connected users has been reached. The Request Management Server can then authorize the mobile device on the DRM server according to a defined policy. Thanks to the license obtained by the DRM server, the mobile device can then decrypt the digital content provided by the gateway.

Advantageously, the method according to the invention prevents a mobile device connected to an unsubscribed gateway to access the protected digital content.

Advantageously, the verification of the timestamp makes it possible to discard an old request. In fact, if the lapse of time between the emission of the request and the authorization is too long, the subscription status of the gateway could have changed, for example by losing the right to broadcast the digital content in the public space. Also, if the lapse of time between the emission of the request and the authorization is too long, it could mean that the mobile device has been connected to the gateway in the past but is not connected anymore (and is now connected to a gateway without subscription). In that specific case, mobile device shall not access digital content provided by the gateway.

Besides the main characteristics, which have been outlined in the foregoing paragraphs, the method according to the invention may include one or more additional characteristics from those listed in the follow, either individually or in any technical possible combination thereof:
- the gateway is connected to a satellite communication system;
- the method according to the invention comprises a further step of streaming a digital content through the gateway, the digital content being decrypted by the authorized mobile device thanks to a license obtained by the DRM server, the digital content being provided by the satellite connection.
- the timestamp is considered valid if the signed request sent by the mobile device arrives to the Request Management Server in a time delay smaller than 5 minutes;
- the mobile device is authorized for a lapse of time of 1 hour;
- the gateway is a set top box for receiving a satellite signal;
- the gateway is a SmartBEAM gateway;
- the method uses a private/public key cryptography protocol;
- the gateway signs the request with its private key and the Request Management Server verifies the signature thanks to his database of gateways public keys;
- the method uses a symmetric cryptography protocol with only one private key;
- the gateway and the mobile device are connected to an Internet access or to a local network;
- the gateway and the mobile device are connected to a WiFi network;
- the gateway and the mobile device are connected to the same network access point;
- the Request Management Server verifies that the gateway has an active subscription before authenticating said gateway;
- the Request Management Server verifies that a maximum number of mobile devices connected to the gateway is not reached before authenticating said gateway.

Another object of the invention is a system to authorize a mobile device to access a digital content provided by a satellite connection. Such a system comprises a satellite communication system, a gateway and a customer management server, said system being adapted to execute the method according to the invention.

The system according to the invention can also comprise a DRM server and at least one mobile device.

### LIST OF FIGURES

Other characteristics and advantages of the invention will be evident from the description thereof that is provided in the following, purely for non-limiting, exemplary purposes, with reference to the accompanying drawing, in which:
- Figure 1 schematically shows an authentication method according to the prior art;
- Figure 2 schematically shows the authentication method according to the invention;
- Figure 3 shows the distribution of the assets involved in the present invention;
- Figure 4 shows the main steps of the method according to the invention.

### DETAILED DESCRIPTION OF THE INVENTION

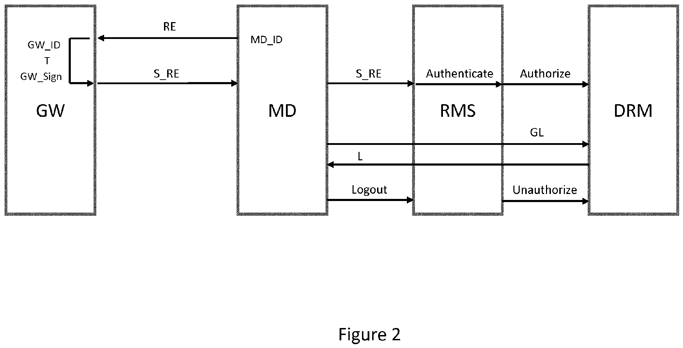

Figure 2 schematically shows the method M according to the invention. A mobile device MD sends a request RE to the gateway GW, the request RE containing the mobile device identifier, MB_ID.

The gateway GW receives the request RE and adds its gateway identifier GW_ID and a timestamp T. Moreover, the gateway GW signs the request RE with its gateway signature, GW_Sign.

According to an embodiment of the present invention, the gateway signature GW_Sign is the gateway private key in a private/public key cryptographic system.

Alternatively, a symmetric cryptography protocol with only one private key can be used.

The signed request S_RE is then sent to the mobile device MD. The mobile device gathers the signed request S_RE. The signed request S_RE contains theGwID, the mobile device identifier MB_ID, a timestamp T and the gateway signature GW_Sign. The signed request S_RE can also contain a random number added by the gateway GW. The presence of a random number adds complexity to the signed request, making it difficult for an attacker to decipher the signed request S_RE.

The mobile device MB sends then the signed request S_RE to the Request Management Server RMS. The request management server RMS verifies that the timestamp T is valid and that the gateway signature GW_Sign is valid.

We mean by valid timestamp T a timestamp that is not older than 5 minutes when the request management server RMS verifies it.

Advantageously, the verification of the validity of the timestamp allows to discard signed requests or challenges that are too old. This is useful to prevent the authorization of a mobile device MD connected to a gateway whose subscription has meanwhile expired.

Advantageously, the verification of the gateway signature GW Sign performed by the Request Management Server RMS allows to be sure that the mobile device MD is actually connected to a given specific GW and not to an attacker or another gateway. It is then possible to authorize only the mobile devices connected to a given gateway GW, for example a gateway GW which has an active subscription.

According to an embodiment of the present invention, the verification of the validity of the signature is done by decrypting the gateway GW private key with the Request Management Server RMS database of gateways public keys. This corresponds to the application of a private/public key protocol.

Advantageously, by using a private/public key cryptography protocol, the gateway GW private key is known only by the gateway GW. It is then difficult for an attacker to break the system by knowing the private key of the gateway GW. In other words, the use of a private/public key cryptography protocol greatly reduces the possibility of intrusion by an attacker or an unauthorized user or gateway.

If the verification performed by the Request Management Server RMS is successful, the mobile device MD and the gateway GW are authenticated. In other words, the Request Management Server knows that the mobile device MD which sent the signed request S_RE is actually connected to the given gateway GW.

The Request Management Server RMS then verifies the properties of the given gateway GW to which the mobile device MD is connected. For example, the Request Management Server verifies if the subscription of the gateway GW is active or if the maximum number of connected user has been reached. The Request Management Server can then authorize the mobile device on the DRM server enabling the mobile device MD to access the digital content. In other words, once authorized, the mobile device can obtain a license from the DRM server and decrypt the digital content obtained from the gateway.

When the mobile device is authorized on the DRM server, it can get a license GL for accessing a given media content. The DRM server sends the license L to the mobile device MD. The license L can be used by the mobile device MD to decrypt the given media content.

When the mobile device MD logouts from the Request Management Server RMS, it is then unauthorized from the DRM server. Advantageously, the unauthorizing of the mobile device MD takes place at each logout of the mobile device MD. This allows verifying at each mobile device MD login that the mobile device is actually connected to a given gateway GW whose properties can be also verified.

According to an embodiment of the present invention, the authorization of the mobile device MD on the DRM server expires after a given lapse of time. Advantageously, this allows to frequently verify the properties of the gateway to which the mobile device MD is connected.

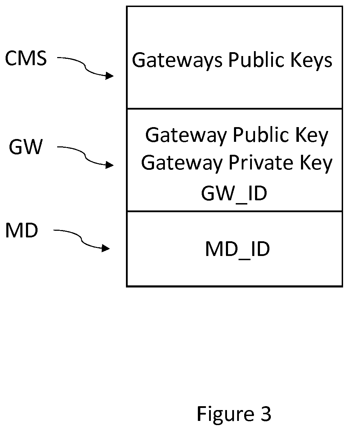

Figure 3 shows the distribution of the assets according to the method M of the present invention, when a private/public key protocol is used. The Request Management Server RMS uses the database of gateway public keys. Thanks to this database the Request Management Server can interpret the signature of the gateway GW and verify that the signed request S_RE has been truly signed by said gateway GW.

The Gateway GW knows the gateway GW public key, the gateway GW private key and the gateway GW identifier. Thanks to its private key, the gateway GW can sign the request or challenge received by the mobile device MD. The mobile device MD uses its identifier, MD_ID.

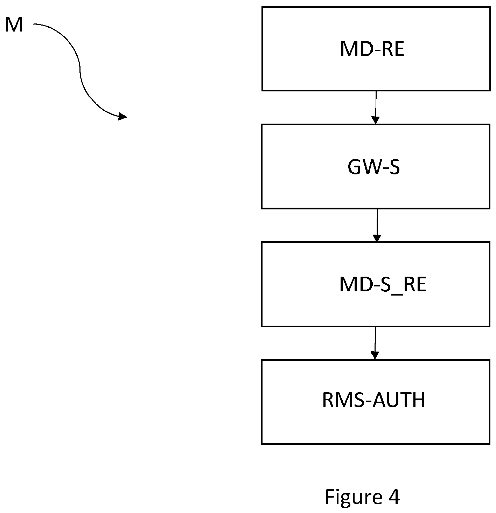

Figure 4 shows the steps of the method M according to the invention. In a first step MD-RE, the mobile device MD sends a request RE to the gateway GW. The request RE contains the mobile device identifier MD ID.

In a second step, GW-S, the gateway GW signs the request RE, adds the gateway identifier GW_ID and a timestamp T and sends the signed request S_RE back to the mobile device MD.

Advantageously, thanks to this step the challenge or request RE issued by the mobile device MD is signed by the gateway GW, which allows verifying that the mobile device MD is truly connected to the given gateway GW.

In the third step, MD-S_RE, the mobile device MD sends the signed request S_RE to a Request Management Server RMS.

Advantageously, the fact that the signed request is sent by the mobile device MD and that it contains the mobile device identifier MD_ID enables the Request Management Server to associate the signed request S_RE to a specific mobile device MD and a specific gateway GW.

In the fourth step, RMS-AUTH, the Request Management Server RMS verifies that the timestamp T is valid and that the request has been signed by the gateway GW, in order to authenticate the gateway and to authorize the mobile device in the DRM server.

According to an embodiment, the Request Management Server uses a database of gateways public keys. Advantageously, this verification allows the Request Management Server RMS to verify that the signed request is actually signed by a given gateway GW. The given gateway GW is then authenticated by the Request Management Server RMS.

The method M according to the invention can comprise also a further step of verifying the properties of the authenticated gateway GW. In fact, before authorizing the mobile device in the DRM server, the Request Management Server RMS verifies the properties of the authenticated gateway GW and if these properties allow the mobile device MD to access the digital content. For example, the Request Management Server verifies that the authenticated gateway GW has an active subscription: without an active gateway GW subscription, the mobile device is not authorized to access the digital content.

Advantageously, this enables the method M according to the invention to avoid authorizing mobile devices MD connected to gateways whose subscription is no more active.

Before authorizing the mobile device in the DRM server, the Request Management Server can also verify that the maximum number of authorized mobile devices for the given gateway GW has not been reached.

Advantageously, this enables to limit the number of mobile devices connected to the gateway GW and to guarantee a large enough bandwidth for each connected device. Moreover, if an attacker manages to copy the private key of a given gateway and to break in the system, this allows to limit the number of mobile devices connected to the fraudulent gateway.

The method M according to the invention can also comprise a further step in which the authorized mobile device MD uses the license obtained by the DRM server to decrypt the digital content retrieved from the gateway.

According to an embodiment, the method M according to the invention comprises a further step of streaming a media content through the gateway, the media content being decrypted by the authorized mobile device thanks to a license obtained by the DRM server, the media content being provided by the satellite connection.

Advantageously, this enables an authorized mobile device to access a digital content provided by a satellite connection.

According to an embodiment of the invention, the communications between the mobile device MD, the gateway GW, the Request Management Server RMS and the DRM server are Internet based communications.

According to an embodiment of the present invention, both the gateway GW and the mobile device MD can be connected to the same Internet access point.

According to an embodiment of the invention, the end user owner of the mobile device can send the request RE and the signed request S_RE through a gateway GW dedicated mobile application.

The method according to the invention can comprise a further step of streaming a media content through the gateway GW, the media content being decrypted by the authorized mobile device thanks to a license obtained by the DRM server, the media content being provided by the satellite connection.

Advantageously, this allows to broadcast a digital content to several users in a public space, even if the public space is located in a geographical zone with a poor internet connection. Moreover, thanks to the method, only the mobile devices connected to an authenticated gateway can access the digital content.

Another object of the present invention is a system S for authorizing a device to access a digital content provided by a satellite connection.

The system S according to the invention comprises a gateway GW, a satellite communication system and a Request Management Server RMS.

The satellite communication system is adapted to receive a satellite signal and to deliver it to the gateway GW, for example through a cable connection. The satellite communication system comprises for example a parabolic antenna and a low-noise block downconverter.

The system S according to the invention can also comprise the Request Management Server RMS and/or the DRM server.

According to an embodiment, all the elements of the system S according to the invention can be incorporated in the DRM server.

According to an embodiment of the invention, the mobile device MD sends the signed request S_RE to the Request Management Server through an Internet connection. Once authorized, the mobile device MD obtains a license from the DRM server through an Internet connection. The digital content is then sent by the gateway GW to the mobile device MD through a local connection like a WiFi connection.

It is worth to note that the method M and the system S are protected from a possible attacker on many levels.

For example, if an attacker has access to the satellite signal and the communications between the gateway GW and the mobile devices MD, an attack can be performed on three axes:
- Getting the digital content from the satellite signal;
- Getting the digital content on the local network;
- Tampering with the messages between elements of the system.

When the attacker tries to retrieve the digital content from the satellite signal or from the local network, the method M is well protected by the DRM protection. In fact, in these cases an attacker should decrypt the signal which is quite difficult without a DRM license. If an attacker tries to tamper with the messages between elements of the system, the robustness of the authentication process depends on the robustness of the public/private key cryptography protocol. Moreover, even if an attacker manages to find the gateway GW private key, the number of the mobile devices connected to the fraudulent gateway will be limited by the Request Management Server RMS. In other words, an attacker cannot use a fraudulent gateway to authorize a high number of mobile devices or to make GW clones.

Moreover, the use of an authenticated HTTPS for the communications between the different elements can also prevent message tampering.

An attacker can also tamper with the different software in the client premises, such as the software onboard of the gateway of the mobile application.

For example, an attacker can try to break the DRM secure player on the mobile device. This could be possible by generating a fake license or by breaking the DRM scrambling algorithm. Vulnerability on this kind of attack mainly depends on DRM robustness.

An attacker can also try to extract the unscrambled video stream from the mobile phone. Vulnerability on this kind of attack depends on DRM and secure player robustness.

It could be possible for attacker to try to clone the mobile device identifier MB_ID in order to clone an authorized device. In this case the DRM server can monitor for frequent changes in the IP of the cloned devices to detect suspicious behavior.

An attacker could also try to access the gateway private key and create low-cost clones of the gateway. To contrast this kind of attack is important to rely on a secure chipset in the gateway. Limiting the number of access per gateway is also effective in limiting the impact of this kind of attack.

## Claims

1. Method (M) for authorizing a mobile device (MD) to access a digital content by authorizing said mobile device on a Digital Right Management server, said mobile device (MD) being connected to a gateway (GW), said method comprising the following steps:
- The mobile device sends (MD-RE) a request (RE) to the gateway (GW), said request containing a mobile device identifier (MB_ID);
- The gateway signs (GW-S) the request (RE), adds a gateway identifier (GW_ ID) and a timestamp (T) and sends the signed request (S_RE) back to the mobile device (MD);
- The mobile device (MD) sends (MD-S_RE) the signed request (S_RE) to a Request Management Server (RMS);
- The Request Management Server (RMS) verifies (RMS-AUTH) that the timestamp (T) is valid and that the request has been signed by the gateway (GW), in order to authenticate the gateway and to authorize the mobile device on a Digital Right Management server.

2. Method (M) according to the previous claim **characterized in that** it comprises a further step of streaming a digital content through the gateway (GW), the digital content being decrypted by the authorized mobile device (MD) thanks to a license (L) obtained by the Digital Right Management server, the digital content being provided by a satellite connection.

3. Method (M) according to the previous claim wherein the timestamp (T) is considered valid if the signed request (S_RE) sent by the mobile device (MD) arrives to the Request Management Server (RMS) in a time delay smaller than 5 minutes .

4. Method (M) according to one of the previous claims wherein the mobile device (MD) is authorized for a lapse of time of 1 hour.

5. Method (M) according to one of the previous claims **characterized in that** the gateway (GW) is a set top box for receiving a satellite signal.

6. Method (M) according to one of the previous claims wherein the gateway (GW) and the mobile device (MD) are connected to an Internet access or to a local network.

7. Method (M) according to claim 5 wherein the gateway (GW) and the mobile device (MD) are connected to the same network access point.

8. Method (M) according to one of the previous claims **characterized in that** the Request Management Server (RMS) verifies that the gateway (GW) has an active subscription before authenticating said gateway (GW).

9. Method (M) according to one of the previous claims **characterized in that** the Request Management Server (RMS) verifies that a maximum number of mobile devices connected to the gateway (GW) is not reached before authenticating said gateway (GW).

10. System (S) for authorizing a mobile device (MD) by authorizing said mobile device (MD) on a Digital Right Management server, said system comprising a satellite communication system, a gateway and a Request Management Server (RMS), said system further comprising means to execute the method according to claims 1 to 9.
